# EUROPÄISCHE PATENTSCHRIFT

(11) **EP 0 601 256 B1**
(45) Veröffentlichungstag und Bekanntmachung des Hinweises auf die Patenterteilung: **08.03.1995**
(21) Anmeldenummer: 92810894.3
(22) Anmeldetag: 18.11.1992
(51) Int. Cl.: G01F 1/84

(54) **Massendurchflussmesser nach dem Coriolis-Prinzip**
Coriolis type mass flow meter
Débimètre massique selon le principe de Coriolis

(43) Veröffentlichungstag der Anmeldung: 15.06.1994
(73) Patentinhaber: Endress + Hauser Flowtec AG, CH-4153 Reinach BL 1 (CH)
(72) Erfinder: Wenger, Alfred, Dr. rer.nat., CH-8413 Neftenbach (ZH) (CH); Bitto, Ennio, CH-4147 Aesch (BL) (CH); Schütze, Christian, CH-4054 Basel (BS) (CH)
(74) Vertreter: Morstadt, Volker, Dipl.-Ing. c/o Endress + Hauser Flowtec AG

(56) Entgegenhaltungen:
- EP-A- 0 083 144
- EP-A- 0 261 435
- EP-A- 0 261 436
- WO-A-89/11635
- DE-A- 3 816 045
- FR-A- 2 394 065
- US-A- 4 934 196
- PATENT ABSTRACTS OF JAPAN vol. 015, no. 198 (P-1204)22. Mai 1991 & JP-A-30 48 729
- AUTOMATISIERUNGSTECHNISCHE PRAXIS - ATP Bd. 30, Nr. 5, 1988, MUNCHEN DE Seiten 224 - 230 E. AMBERGER, E.A. 'UNMITTELBARE MESSUNG DES MASSEDURCHFLUSSES MIT HILFE DER CORIOLIS-KRAFT'

## Beschreibung

Die Erfindung betrifft einen Massendurchflußmesser mit einer nach dem Coriolis-Prinzip arbeitenden, von einem zu messenden Fluid durchströmten Schwingkörperanordnung.

Im umfangreichen Stand der Technik über Coriolis-Massendurchflußmesser mit aus Rohren bestehenden Schwingkörpern gibt es nur zwei prinzipielle Arten von Rohrverläufen, nämlich gerade Rohre und beliebig gebogene oder sogar gewundene Rohre, unter denen aus technischen Gründen die U-förmigen Rohrschleifen, also solche mit einem geraden Einlaßrohr mit Einlaßende und mit einem geraden Auslaßrohr mit Auslaßende sowie mit einem das Einlaßrohr mit dem Auslaßrohr verbindenden Rohrbogen, die bevorzugten Rohrformen sind. Bei beiden Arten von Rohrverläufen werden aus Symmetriegründen meist zwei im Ruhezustand in zwei parallelen Ebenen parallel zueinander verlaufende Rohrschleifen verwendet.

Zu der einen der beiden Varianten von Massendurchflußmessern mit zwei parallelen geraden Rohren kann rein beispielsweise auf die eigenen US-A 47 68 384, 47 93 191, und zu der anderen Variante mit zwei parallelen U-förmigen Rohrschleifen kann z.B. auf die US-A 41 27 028 verwiesen werden.

Im einzelnen sind einerseits in den eingangs erwähnten beiden US-A 47 68 384 und 47 93 191 die folgenden Merkmale jeweils gemeinsam beschrieben: Massendurchflußmesser
- mit einer nach dem Coriolis-Prinzip arbeitenden, von einem zu messenden Fluid durchströmten Schwingkörper-Anordnung, die folgende Teile umfaßt:
   -- ein erstes gerades Rohr mit einem Einlaßende und einem Auslaßende,
   -- eine zweites gerades Rohr mit einem Einlaßende und einem Auslaßende,
      --- welche beiden Rohre, im Ruhezustand parallel zueinander verlaufen,
   -- einen die beiden geraden Rohre in der von den Achsen der geraden Rohre gebildeten Ebene in zueinander entgegengesetzte Resonanz-Schwingungen versetzenden Schwingungserreger und
   -- zwei entlang der geraden Rohre versetzt angeordnete Sensoren für deren Schwingungen, sowie
- mit einer Treiberelektronik für den Schwingungserreger und
- mit einer Auswerteelektronik,
   -- die aus der Phasendifferenz der Signale der Sensoren den Massendurchfluß und/oder aus der Schwingfrequenz die Dichte des Fluids bestimmt.

Andererseits sind in der eingangs erwähnten US-A 41 27 028 die folgenden Merkmale gemeinsam beschrieben: Massendurchflußmesser
- mit einer nach dem Coriolis-Prinzip arbeitenden, von einem zu messenden Fluid durchströmten Schwingkörper-Anordnung, die folgende Teile umfaßt:
   -- eine erste U-förmige Rohrschleife und
   -- eine zweite U-förmige Rohrschleife, die
      --- im Ruhezustand in zwei parallelen Ebenen parallel zueinander verlaufen,
      --- je ein gerades Einlaßrohr mit einem Einlaßende,
      --- je ein gerades Auslaßrohr mit einem Auslaßende,
         ---- welche Enden in einer gemeinsamen Halterung fixiert sind, und
      --- einen das jeweilige Einlaßrohr mit dem jeweiligen Auslaßrohr verbindenden Rohrbogen aufweisen,
   -- einen die beiden Rohrschleifen in zueinander entgegengesetzte, senkrecht zu ihrer jeweiligen Ebene erfolgende Resonanz-Schwingungen versetzenden Schwingungserreger und
   -- zwei entlang der geraden Rohre versetzt angeordnete Sensoren für deren Schwingungen,
- mit einer Treiberelektronik für den Schwingungserreger und
- mit einer Auswerteelektronik,
   -- die aus der Phasendifferenz der Signale der Sensoren den Massendurchfluß und/oder aus der Schwingfrequenz die Dichte des Fluids bestimmt.

Beide Varianten von Massendurchflußmessern haben je eigene Vorteile, aber auch Nachteile. So sind einerseits Massendurchflußmesser mit U-förmigen Rohrschleifen nicht in allen Einbaulagen selbstentleerend, und sie sind bei weitem nicht so unempfindlich gegen aus der Rohrleitung stammende Vibrationen wie Massendurchflußmesser mit ausschließlich geraden Rohren. Außerdem unterliegen die Rohrschleifen durch die Corioliskräfte einer Verwindung aus der durch ihre Ruhelage bestimmten Ebene heraus.

Andererseits sind die Massendurchflußmesser mit ausschließlich geraden Rohren u.U. stärker wärmeschockempfindlich als die mit U-förmigen Rohrschleifen, und die Abhängigkeit des Meßergebnisses vom Druck des Fluids kann größer als bei U-förmigen Rohrschleifen sein, was sich insb. bei schwankendem Fluiddruck bemerkbar macht.

Ferner sind in der JP-A 3-48729 und dem dazu erschienenen Abstract einige Merkmale von gerade Rohre aufweisenden Massendurchflußmessern und einige Merkmale von U-förmige Rohre aufweisenden Massendurchflußmessern gemeinsam beschrieben: Massendurchflußmesser
- mit einer nach dem Coriolis-Prinzip arbeitenden, von einem zu messenden Fluid durchströmten Schwingkörper-Anordnung, die folgende Teile umfaßt:
   -- eine U-förmige Rohrschleife, die
      --- ein gerades Einlaßrohr mit einem Einlaßende,
      --- ein gerades Auslaßrohr mit einem Auslaßende,
         ---- welche Enden in einer gemeinsamen ersten Halterung fixiert sind, und
      --- einen das Einlaßrohr mit dem Auslaßrohr verbindenden Rohrbogen aufweisen,
   -- eine an der Übergangsstelle von Einlaßrohr bzw. Auslaßrohr in den zugehörigen Rohrbogen angeordnete, mit der ersten Halterung fest verbundene zweite Halterung,
      --- in der die geraden Rohre zur Festlegung eines Schwingungsknotens fixiert sind,
   -- einen in der Mitte der beiden geraden Rohre angebrachten Schwingungserreger,
      --- der die an dieser Stelle über ein Abstandsstück miteinander fixierten Rohre in parallele Resonanz-Schwingungen in der die Achsen der geraden Rohre enthaltenden Ebene versetzt,
   -- und einen zwischen den geraden Rohren angeordneten Sensor für deren Schwingungen,
- mit einer Treiberelektronik für den Schwingungserreger und
- mit einer Auswerteelektronik,
   -- die aus der Phasendifferenz der Signale der Sensoren den Massendurchfluß bestimmt.

Die in den Ansprüchen definierte Erfindung dient der Behebung der oben genannten Nachteile durch die Schaffung eines Massendurchflußmessers, der Vorteile der beiden erwähnten Varianten geschickt und besser vereinigt als der zuletzt erwähnte Massendurchflußmesser des Standes der Technik.

Hierzu besteht die Erfindung in einem Massendurchflußmesser
- mit einer nach dem Coriolis-Prinzip arbeitenden, von einem zu messenden Fluid durchströmten, in den Verlauf einer Rohrleitung einzufügenden Schwingkörper-Anordnung, die folgende Teile umfaßt:
   -- eine erste Rohrschleife und
   -- eine zweite Rohrschleife, die
      --- in jeweils einer Ebene verlaufen,
      --- kongruent zueinander sind,
      --- je ein gerades Einlaßrohr mit einem Einlaßende,
      --- je ein gerades Auslaßrohr mit einem Auslaßende,
         ---- welche Enden in einer gemeinsamen Halterung fixiert sind, und
      --- einen das jeweilige Einlaßrohr mit dem jeweiligen Auslaßrohr verbindenden Rohrbogen aufweisen,
   -- eine an der Übergangsstelle der Einlaßrohre und der Auslaßrohre zu den zugehörigen Rohrbögen angeordnete Platte mit dem Außendurchmesser der geraden Rohre und der Rohrbögen entsprechenden Bohrungen,
      --- in denen diese zur Festlegung eines jeweiligen Schwingungsknotens fixiert sind,
   -- mindestens einen die beiden Rohrbögen in zueinander entgegengesetzte, senkrecht zu ihrer jeweiligen Ebene erfolgende Resonanz-Schwingungen versetzenden Schwingungserreger und
   -- mindestens zwei entlang der geraden Rohre versetzt angeordnete Sensoren für deren Schwingungen,
- mit einer Treiberelektronik für den Schwingungserreger und
- mit einer Auswerteelektronik,
   -- die aus der Phasendifferenz der Signale der Sensoren den Massendurchfluß und/oder aus der Schwingfrequenz die Dichte des Fluids bestimmt.

Die Erfindung hat u.a. die Vorteile: Die geraden Rohre schwingen nur wie ein beidseits eingespannter Stab, d.h. nur in solchen Moden, wie sie ausschließlich bei der obigen Variante mit geraden Rohren auftreten, die erwähnte Verwindung also vermieden ist; die Wärmeschock-Empfindlichkeit ist wegen der gewählten U-Form im Vergleich zu der Variante mit geraden Rohren vernachlässigbar, und die Druck-Abhängigkeit ist wesentlich verringert.

Nach einer Ausgestaltung der Erfindung können die Ebenen der Rohrschleifen parallel zueinander sein.

Nach einer anderen Ausgestaltung der Erfindung kann auch in jeder Rohrschleife das Einlaßrohr parallel zum Auslaßrohr verlaufen.

Die Erfindung wird nun anhand von in den Figuren der Zeichnung dargestellten Ausführungsbeispielen näher erläutert.
- Fig. 1: zeigt schematisch in Richtung der Rohrleitung die Frontansicht eines ersten Massendurchflußmessers,
- Fig. 2: zeigt schematisch die Seitenansicht des Massendurchflußmessers von Fig. 1,
- Fig. 3: zeigt schematisch in Richtung der Rohrleitung die Frontansicht eines zweiten Massendurchflußmessers, und
- Fig. 4: zeigt schematisch die Seitenansicht des Massendurchflußmessers von Fig. 2.

In den Figuren der Zeichnung sind der besseren Systematik wegen die Bezugszeichen von Teilen, die zwar vorhanden, aber von gezeichneten Teilen verdeckt sind, in Klammern neben den Bezugszeichen der verdeckenden Teile angegeben.

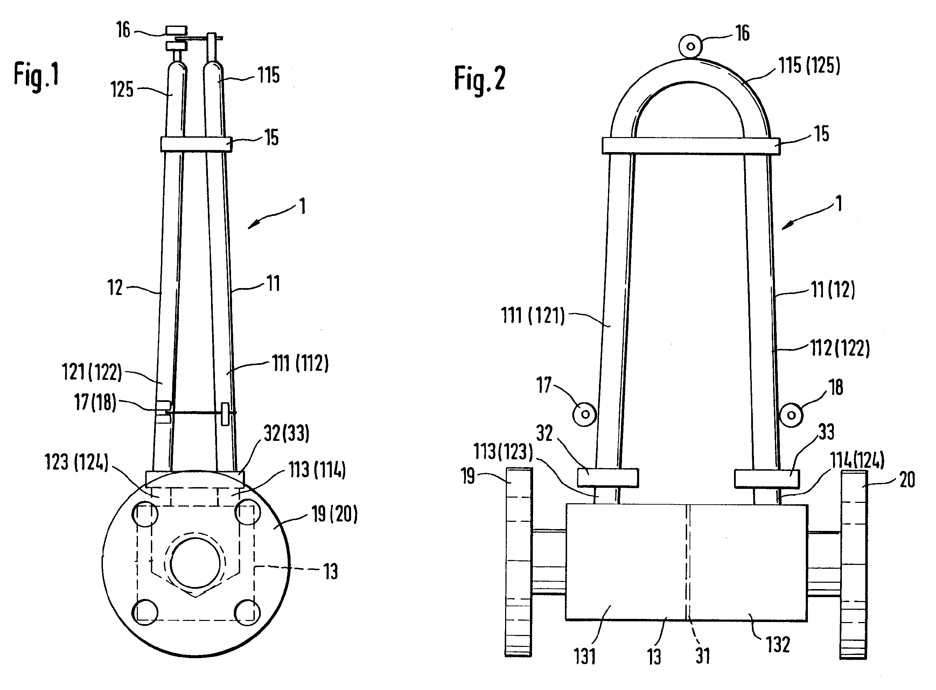

Der in Fig. 1 in Frontansicht und in Richtung einer Rohrleitung sowie in Fig. 2 in Seitenansicht gezeigte mechanische Teil eines Massendurchflußmessers 1, der in den Verlauf dieser von einem zu messenden Fluid durchströmten, aus Übersichtlichkeitsgründen jedoch nicht dargestellten Rohrleitung eines gegebenen Durchmessers eingesetzt werden kann, hat eine Halterung 13, die über Flansche 19, 20 mit der Rohrleitung druckdicht verbindbar ist.

In einer Richtung senkrecht zur Achse der Rohrleitung und der Halterung 13 sind zwei Rohrschleifen 11, 12, die in jeweils einer Ebene verlaufen und kongruent zueinander sind, an der Halterung 13 derart befestigt, daß das Fluid aus deren Einlaßteil 131 in jede Rohrschleife 11, 12 fließen kann.

In der Halterung 13 sind an deren Einlaßteil 131 ein Einlaßende 113 eines geraden Einlaßrohrs 111 der Rohrschleife 11 und ein Einlaßende 123 eines geraden Einlaßrohrs 112 der Rohrschleife 12, z.B. durch Löten, Hartlöten oder Schweißen, fixiert. Am Auslaßteil 132 der Halterung 13 sind ein Auslaßende 114 eines geraden Auslaßrohrs 112 der Rohrschleife 11 und ein Auslaßende 124 eines geraden Auslaßrohrs 122 der Rohrschleife 12, z.B. ebenfalls durch Löten, Hartlöten oder Schweißen, fixiert.

Das jeweilige Einlaßrohr 111, 121 ist mit dem jeweiligen Auslaßrohr 112, 122 über jeweils einen Rohrbogen 115, 125 verbunden. An der Übergangsstelle von jeweiligem Einlaßrohr 111 bzw.121 zu jeweiligem Auslaßrohr 112 bzw. 122 in den zugehörigen Rohrbogen 115 bzw. 125 ist eine Platte 15 mit Bohrungen angeordnet, die dem Außendurchmesser der geraden Ein- und Auslaßrohre und der Rohrbögen entsprechen und in denen diese zur Festlegung eines jeweiligen Schwingungsknotens, z.B. wieder durch Löten, Hartlöten oder Schweißen, fixiert sind.

Im Ausführungsbeispiel von Fig. 1 und Fig. 2 sind die Ebenen der Rohrschleifen 11, 12 nicht parallel, sondern gegeneinander geneigt. Aus Fig. 2 geht hervor, daß auch das Ein- und das Auslaßrohr jeder Rohrschleife nicht parallel, sondern geneigt zueinander verlaufen. Durch diese doppelte Nicht-Parallelität wird erricht, daß der Massendurchflußmesser nur wenig empfindlich gegenüber mechanischen Störungen, insb. Schwingungen oder Schocks, ist, die aus der Rohrleitung stammen.

In der Halterung 13 ist eine Trennwand 31 vorgesehen, die deren Einlaßteil 131 von deren Auslaßteil 132 strömungsmäßig trennt. Anstatt der Trennwand 31 können auch zwei gebogene Verteilerstücke in der Halterung 13 vorgesehen sein, die die Strömungsrichtung möglichst gleichmäßig in Richtung der geraden Rohre 111, 121 bzw. 112, 122 umlenken und für die Aufteilung des einfließenden Fluids auf bzw. das Sammeln des ausfließenden Fluids aus den beiden Rohrschleifen 11, 12 sorgen.

In der Nähe der jeweiligen Fixierstelle der Rohrschleifen 11, 12 an der Halterung 13 kann jeweils eine die Einlaßrohre 111, 121 bzw. die Auslaßrohre 112, 122 fest miteinander verbindende Schwingungsknotenplatte 32, 33 vorgesehen werden. Diese Verbindung kann ebenfalls durch Löten, Hartlöten oder Schweißen hergestellt sein. Somit kann die Fixierstelle von mechanischen Beanspruchungen entlastet werden.

Am Scheitelpunkt des jeweiligen Rohrbogens 115, 125 ist ein diese in zueinander entgegengesetzte, senkrecht zu ihrer jeweiligen Ebene erfolgende Resonanz-Schwingungen versetzender Schwingungserreger 16 angeordnet, der z.B. von der Art sein kann, wie er in der eingangs genannten US-A 47 68 384 oder in der eigenen US-A 48 01 897 beschrieben ist. Der Schwingungserreger 16 ist ein elektrodynamischer Erreger mit einer am Rohrbogen 125 befestigten Spule und einem am Rohrbogen 115 befestigten Anker.

Die Schwingungen der Rohrbögen 115, 125 übertragen sich derart auf das Einlaßrohrpaar 111, 121 und das Auslaßrohrpaar 112, 122, daß jedes Rohrpaar ebenfalls zu entgegengesetzten Resonanz-Schwingungen angeregt wird. Die Schwingungen des Einlaßrohrpaars sind mit denen des Auslaßrohrpaars synchron und deren jeweilige Schwingungsebene fällt mit der von den Achsen der Rohre jeden Rohrpaars gebildeten jeweilige Ebene zusammen. Der Schwingungserreger 16 wird von einer nicht dargestellten Treiberelektronik gespeist. Diese kann z.B. von der in der schon genannten US-A 48 01 897 beschriebenen Art sein.

In Fig. 1 schwingt somit das zu sehende Rohrpaar 111, 121 in der Zeichenebene, während in Fig. 2 die Schwingungen senkrecht zur Zeichenebene erfolgen. Somit ist das in der obigen JP-A erwähnte parallele Miteinander-Schwingen der geraden Teilrohre einer jeden Rohrschleife in deren Ebene gerade vermieden.

Versetzt entlang der geraden Rohre, bevorzugt in jeweils demselben Abstand vom Schwingungserreger 16, sind zwei Sensoren 17, 18 für deren Schwingungen angeordnet. Diese Sensoren können z.B. optoelektronische Sensoren sein, wie sie in der genannten US-A 48 01 897 beschrieben sind, oder es können elektromagnetische Sensoren vorgesehen werden, wie sie z.B. in der EP-A 83 144 erläutert sind.

Die Sensoren 16, 17 sind mit einer nicht dargestellten Auswerteelektronik verbunden, die aus der Phasendifferenz der Signale der Sensoren den Massendurchfluß und/oder aus der Schwingfrequenz die Dichte des Fluids bestimmt. Eine Auswerteelektronik für die erwähnten optoelektronischen Sensoren ist z.B. in der Zeitschrift "Automatisierungstechnische Praxis atp", 1988, Nr. 5, Seiten 224 bis 230 beschrieben.

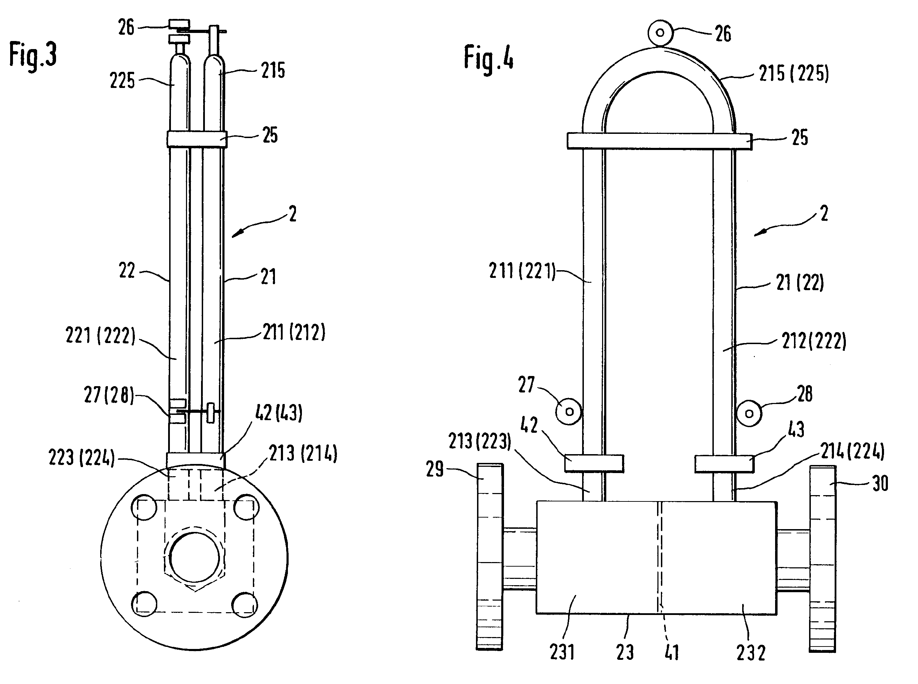

Beim zweiten Ausführungsbeispiel nach den Fig. 3 und 4 sind sowohl die Ebenen der Rohrschleifen 21, 22 als auch deren jeweilige Einlaßrohre 211, 221 und Auslaßrohre 122, 222 parallel zueinander. Durch diese Ausbildung ergibt sich eine besonders gute Symmetrie des Massendurchflußmessers 2 dieser Figuren.

Im einzelnen hat der in Fig. 3 in Frontansicht und in Richtung der Rohrleitung sowie in Fig. 4 in Seitenansicht gezeigte mechanische Teil des Massendurchflußmessers 2 eine Halterung 23, die über Flansche 29, 30 mit der Rohrleitung druckdicht verbindbar ist.

In einer Richtung senkrecht zur Achse der Rohrleitung und der Halterung 23 sind zwei zueinander kongruente, ebene Rohrschleifen 21, 22 an der Halterung 23 derart befestigt, daß das Fluid aus deren Einlaßteil 231 in jede Rohrschleife fließen kann.

In der Halterung 23 sind an deren Einlaßteil 231 ein Einlaßende 213 des geraden Einlaßrohrs 211 der Rohrschleife 21 und ein Einlaßende 223 des geraden Einlaßrohrs 221 der Rohrschleife 22 fixiert. Am Auslaßteil 232 der Halterung 23 sind ein Auslaßende 214 des geraden Auslaßrohrs 212 der Rohrschleife 21 und ein Auslaßende 224 des geraden Auslaßrohrs 222 der Rohrschleife 22 fixiert.

Das jeweilige Einlaßrohr 211, 221 ist mit dem jeweiligen Auslaßrohr 212, 222 über jeweils einen Rohrbogen 215, 225 verbunden. An der Übergangsstelle von jeweiligem Einlaßrohr 211 bzw.221 zu jeweiligem Auslaßrohr 212 bzw. 222 in den zugehörigen Rohrbogen 215 bzw. 225 ist eine Platte 25 mit Bohrungen angeordnet, die dem Außendurchmesser der geraden Ein- und Auslaßrohre und der Rohrbögen entsprechen und in denen diese zur Festlegung eines jeweiligen Schwingungsknotens fixiert sind.

In der Halterung 23 ist eine Trennwand 41 vorgesehen, die deren Einlaßteil 231 von deren Auslaßteil 232 strömungsmäßig trennt. Anstatt der Trennwand 41 können auch die oben erwähnten Verteilerstücke vorgesehen sein.

In der Nähe der jeweiligen Fixierstelle der Rohrschleifen 21, 22 an der Halterung 23 kann jeweils eine die Einlaßrohre 211, 221 bzw. die Auslaßrohre 212, 222 fest miteinander verbindende Schwingungsknotenplatte 42, 43 vorgesehen werden. Somit kann die Fixierstelle von mechanischen Beanspruchungen entlastet werden.

Am Scheitelpunkt des jeweiligen Rohrbogens 215, 225 ist ein diese in zueinander entgegengesetzte, senkrecht zu ihrer jeweiligen Ebene erfolgende Resonanz-Schwingungen versetzender Schwingungserreger 26 angeordnet, der z.B. von der oben erwähnten Art sein kann und ein elektrodynamischer Erreger mit einer am Rohrbogen 225 befestigten Spule und einem am Rohrbogen 215 befestigten Anker ist. Der Schwingungserreger 26 wird von der bereits erwähnten Treiberelektronik gespeist.

Die Schwingungen der Rohrbögen 215, 225 erregen zu den oben erläuterten entgegengesetzten Resonanz-Schwingungen äquivalente Schwingungen des Einlaßrohrpaars 221, 211 und des Auslaßrohrpaars 212, 222. Deren jeweilige Schwingungsebene fällt somit wieder mit der von den Achsen der Rohre jeden Rohrpaars gebildeten jeweilige Ebene zusammen. In Fig. 3 ist daher die Zeichenebene, in Fig. 4 dagegen eine Ebene senkrecht zur Zeichenebene eine der beiden Schwingungsebenen.

Entlang der geraden Rohre, bevorzugt in jeweils demselben Abstand vom Schwingungserreger 26, sind zwei Sensoren 27, 28 für deren Schwingungen versetzt angeordnet. Diese Sensoren können von der oben erläuterten Art sein und sind mit einer entsprechenden Auswerteelektronik verbunden.

Auch beim Ausführungsbeispiel der Fig. 3 und 4 können die Fixierungen der Rohre durch Löten, Hartlöten oder Schweißen hergestellt sein.

Die zweifache Parallelität der Rohrschleifen und deren gerader Rohre nach den Fig. 3 und 4 ist nicht zwingend; es kann nur jeweils eine unter Beibehaltung der anderen Nicht-Parallelität nach den Fig. 1 und 2 realisiert sein. Bei parallelen Rohrschleifen können also die geraden Rohre in jeder Rohrschleife gegeneinander geneigt sein, oder die Ebenen der Rohrschleifen bilden bei parallelen geraden Rohren einen Winkel miteinander. Auch mit nur einer dieser Nicht-Parallelitäten sind solche Massendurchflußmesser nur wenig empfindlich gegenüber mechanischen Störungen, insb. Schwingungen oder Schocks, ist, die aus der Rohrleitung stammen.

Als Material für die geraden Rohre und die Rohrbögen eignen sich besonders gut nichtrostende Stähle. Auch die unter dem Namen Hastalloy bekannte Nickellegierung ist gut geeignet.

## Patentansprüche

1. Massendurchflußmesser (1; 2)
- mit einer nach dem Coriolis-Prinzip arbeitenden, von einem zu messenden Fluid durchströmten, in den Verlauf einer Rohrleitung einzufügenden Schwingkörper-Anordnung, die folgende Teile umfaßt:
-- eine erste Rohrschleife (11; 21) und
-- eine zweite Rohrschleife (12; 22), die
--- in jeweils einer Ebene verlaufen,
--- kongruent zueinander sind,
--- je ein gerades Einlaßrohr (111, 121; 211, 221) mit einem Einlaßende (113, 123; 213, 223,),
--- je ein gerades Auslaßrohr (112, 122; 212, 222) mit einem Auslaßende (114, 124; 214, 224),
---- welche Enden in einer gemeinsamen Halterung (13; 23) fixiert sind,
--- und einen das jeweilige Einlaßrohr mit dem jeweiligen Auslaßrohr verbindenden Rohrbogen (115; 125) aufweisen,
-- eine an der Übergangsstelle der Einlaßrohre und der Auslaßrohre zu den zugehörigen Rohrbögen angeordnete Platte (15; 25) mit dem Außendurchmesser der geraden Rohre und der Rohrbögen entsprechenden Bohrungen,
--- in denen diese zur Festlegung eines jeweiligen Schwingungsknotens fixiert sind,
-- mindestens einen die beiden Rohrbögen in zueinander entgegengesetzte, senkrecht zu ihrer jeweiligen Ebene erfolgende Resonanz-Schwingungen versetzenden Schwingungserreger (16; 26) und
-- mindestens zwei entlang der geraden Rohre versetzt angeordnete Sensoren (17, 18; 27, 28) für deren Schwingungen,
- mit einer Treiberelektronik für den Schwingungserreger und
- mit einer Auswerteelektronik,
-- die aus der Phasendifferenz der Signale der Sensoren den Massendurchfluß und/oder aus der Schwingfrequenz die Dichte des Fluids bestimmt.

2. Massendurchflußmesser nach Anspruch 1, bei dem die Ebenen der Rohrschleifen (11, 12; 21, 22) parallel zueinander sind.

3. Massendurchflußmesser nach Anspruch 1 oder 2, bei dem in jeder Rohrschleife (11, 12; 21, 22) das Einlaßrohr (111, 121; 211, 221) parallel zum Auslaßrohr (112, 122; 212, 222) verläuft.

## Claims

1. A mass flow meter (1, 2)
- with a vibrating-body arrangement working on the Coriolis principle through which flows a fluid to be measured and which is designed to be installed in a conduit and comprises the following parts:
-- a first tube loop (11; 21) and
-- a second tube loop (12; 22) which
--- each lie in one plane,
--- are congruent and each consist of
--- a straight inlet tube (111, 121; 211, 221) with an inlet end (113, 123; 213, 223),
--- a straight outlet tube (112, 122; 212, 222) with an outlet end (114, 124; 214, 224),
---- which ends are fixed in a common mount (13; 23),
--- and a tube bend (115; 125) interconnecting the inlet tube and the outlet tube,
-- a plate (15; 25) mounted at the transitions from the inlet and outlet tubes to the associated tube bend and having holes
--- which correspond to the outside diameter of the straight tubes and the tube bends and
--- in which the latter are fixed to determine a respective vibration node,
-- at least one vibration exciter (16; 26) which sets the two tube bends into opposite sympathetic vibrations perpendicular to their respective planes, and
-- at least two sensors (17, 18; 27, 28) spaced along the straight tubes for sensing the vibrations of the latter,
- with driver electronics for the vibration exciters, and
- with evaluation eLectronics
-- which determine the mass flow rate from the phase difference of the sensor signals and/or the density of the fluid from the vibration frequency.

2. A mass flow meter as claimed in claim 1 wherein the planes of the tube loops (11, 12; 21, 22) are parallel to each other.

3. A mass flow meter as claimed in claim 1 or 2 wherein the inlet tube (111, 121; 211, 221) in each tube loop (11, 12; 21, 22) extends the outlet tube (112, 122; 212, 222).

## Revendications

1. Débitmètre massique (1; 2) comprenant
- un ensemble de corps vibrant fonctionnant selon le principe de Coriolis, traversé par l'écoulement d'un fluide à mesurer, destiné à être intégré dans le parcours d'une conduite tubulaire, et comprenant les pièces suivantes:
-- une première boucle de tube (11; 21) et
-- une seconde boucle de tube (12; 22), qui
--- s'étendent chacune dans un plan,
--- sont congruentes l'une à l'autre,
--- comportent chacune un tube d'entrée rectiligne (111, 121; 211, 221) présentant une extrémité d'entrée (113, 123; 213, 223),
--- chacune un tube de sortie rectiligne (112, 122; 212, 222) présentant une extrémité de sortie (114, 124; 214, 224),
---- ces extrémités sont fixées dans un support commun (13; 23),
--- et une partie coudée de tube (115; 125) reliant le tube d'entrée respectivement au tube de sortie,
-- une plaque (15; 25) disposée dans la zone de raccordement des tubes d'entrée et des tubes de sortie aux parties de tube coudées associées, et comportant des alésages correspondant au diamètre extérieur des tubes droits et des parties de tube coudées,
--- dans lesquels ceux-ci sont fixés pour définir un noeud de vibration respectif,
-- au moins un excitateur de vibrations (16; 26) transmettant aux deux parties de tube coudées, des vibrations de résonance opposées s'effectuant de manière perpendiculaire à leurs plans respectifs, et
-- au moins deux capteurs (17, 18; 27, 28) disposés de manière décalée le long des tubes rectilignes pour la vibration de ces tubes,
- une électronique de puissance pour l'excitateur de vibrations, et
- une électronique de traitement,
-- qui, à partir de la différence de phase des signaux des capteurs, détermine le débit massique et/ou à partir de la différence de vibration, détermine la densité du fluide.

2. Débitmètre massique selon la revendication 1, dans lequel les plans des boucles de tube (11, 12; 21, 22) sont parallèles les uns aux autres.

3. Débitmètre massique selon la revendication 1 ou 2, dans lequel dans chaque boucle de tube (11, 12; 21, 22), le tube d'entrée (111, 121, 211, 221) s'étend parallèlement au tube de sortie (112, 122; 212; 222).
